# EUROPÄISCHE PATENTSCHRIFT

(11) **EP 1 999 423 B1**
(45) Veröffentlichungstag und Bekanntmachung des Hinweises auf die Patenterteilung: **03.06.2015**
(21) Anmeldenummer: 07723338.5
(22) Anmeldetag: 16.03.2007
(51) Int. Cl.: F28D 7/06, F28F 1/02, F28F 3/02

(54) **ABGASKÜHLER FÜR EIN KRAFTFAHRZEUG**
EXHAUST GAS COOLER FOR A MOTOR VEHICLE
REFROIDISSEUR DE GAZ D'ECHAPPEMENT POUR VÉHICULE AUTOMOBILE

(30) Priorität: 16.03.2006 DE 102006012480; 30.03.2006 DE 102006015224
(43) Veröffentlichungstag der Anmeldung: 10.12.2008
(73) Patentinhaber: MAHLE Behr GmbH & Co. KG, 70469 Stuttgart (DE)
(72) Erfinder: GESKES, Peter, 73760 Ostfildern (DE); GRÜNENWALD, Bernd, 72622 Nürtingen (DE); KNÖDLER, Wolfgang, 71332 Waiblingen (DE); RUCKWIED, Jens, 70195 Stuttgart (DE); KNÖDLER, Wolfgang, 71332 Waiblingen (DE); STRAHL-SCHÄFER, Daphne, 88212 Ravensburg (DE)
(74) Vertreter: Grauel, Andreas
(86) Internationale Anmeldenummer: PCT/EP2007/002360
(87) Internationale Veröffentlichungsnummer: WO 2007/104580

(56) Entgegenhaltungen:
- EP-A1- 1 342 970
- EP-A2- 1 231 448
- EP-A2- 1 306 639
- WO-A-2005/040708
- DE-A1- 3 136 865
- DE-A1- 10 060 104
- FR-A- 2 579 311
- JP-A- 58 055 684
- JP-A- 60 073 294
- JP-A- S63 189 791
- US-A- 2 873 098
- US-A- 4 735 260
- US-A- 4 794 985
- US-A- 5 314 013
- DATABASE WPI Week 197941 Derwent Publications Ltd., London, GB; AN 1979-74985B XP002443466 -& SU 642 590 A (KURACH N A) 17. Januar 1979 (1979-01-17)

## Beschreibung

Die vorliegende Erfindung betrifft einen Abgaskühler für ein Kraftfahrzeug nach dem Oberbegriff des Anspruchs 1. Ein solcher Abgaskühler ist aus der FR 2579311 bekannt.

Beim Bau von Wärmetauschern für Kraftfahrzeuge werden zunehmend Anforderungen an die Tauscherieistung bei begrenztem Bauraum gestellt. Insbesondere bei der Kühlung von Abgas zwecks Rückführung zu einem Verbrennungsmotor müssen dabei zudem hohe Temperaturdifferenzen bewältigt werden.

Es ist die Aufgabe der Erfindung, einen Abgaskühler für ein Kraftfahrzeug anzugeben, der eine hohe Tauscherleistung bei begrenztem Bauraum mit einer kostengünstigen Herstellung kombiniert.

Abgaskühler der eingangs genannten Art haben die Aufgabe ein Abgas mit Hilfe eines kälteren zweiten Fluids zu kühlen.

Das zweite Fluid kann in Form eines Kühlmittels gebildet sein, beispielsweise eines flüssigen oder gasförmigen oder flüssiggas-gemischten Kühlmittels, welches jedenfalls im Falle eines flüssigen Kühlmittels dem Kühlkreislauf der Brennkraftmaschine entnommen werden kann. Grundsätzlich ist es zur Steigerung eines thermodynamischen Wirkungsgrades anzustreben, dass die Abkühlung bis auf ein möglichst niedriges Temperaturniveau erfolgt. Es ist bekannt, dass das Konzept gekühlter Abgasrückführung oder gekühlter Ladeluft zur Reduzierung von Schadstoffen, insbesondere Stickoxiden im Abgas dienen kann.

Gerade betreffend die Anforderungen heutiger Motoren ist es möglich, mit Abgasrückführkühlern die immer weiter steigenden Anforderungen an die Abgasreinhaltung zu erfüllen. Durch die Abkühlung des Abgases und Wiederzuführung des gekühlten Abgases wird die Verbrennungstemperatur im Motor abgesenkt und führt zu einer verminderten NOₓ - Emission. Steigende Anforderungen an die Schadstoffreduzierung haben den weiteren Ausbau der bekannten Kühlerkonzepte sowie den Entwurf neuer Kühlerkonzepte zur Folge.

Ein Strömungskanal bei einem Wärmetauscher bekannter Art kann aus einem Stahl- oder Edelstahlwerkstoff hergestellt sein. Hier hat sich insbesondere die Korrosionsbeständigkeit von Stahl- und Edelstahlwerkstoffen bewährt.

Es hat sich auch gezeigt, dass Strömungskanäle aus Aluminium oder basierend auf einem Aluminiumwerkstoff deutlich preiswerter herstellbar sind.

Um bei einem Strömungskanal einen Wärmeübergang hinreichend zu verbessern, ist ein Strömungskanal, wie eingangs erläutert, in der Regel mit einer Anzahl von im Innenraum an der Kanalmantelinnenseite angeordneten Stegen ausgestattet. Grundsätzlich kann die Anzahl der Stege zur Erhöhung des Wärmeübergangs betragen Bei einer überhöhten Anzahl von Stegen steigt allerdings die Gefahr eines Verblockens durch Rußpartikel, die sich beispielsweise im Abgas, befinden deutlich an. Es hat sich gezeigt, dass bei zu engen Durchtrittsbereichen im Strömungskanal, welche im Wesentlichen durch den durchströmbaren Querschnitt definiert sind, ein Strömungskanal vergleichsweise schnell verschmutzt und sich im schlimmsten Fall teilweise zusetzen kann. Dieser Prozess als auch weitere Maßnahmen zur Erhöhung eines Wärmeübergangs erhöhen in gegenläufiger Weise auch den bei einem Strömungskanal vorhandenen Druckverlust, was im Rahmen moderner Wärmetauscherkonzepte unerwünscht ist.

Neben der in DE 37 316 69 A1 offenbarten Ausgestaltung eines Strömungskanals mit stranggepresstem Kanalmantel gibt es weitere Arten der Ausgestaltung wie sie beispielsweise aus DE 10 225 812 C1, G 94 065 59.4, DE 36 153 00 C2 und DE 202 05 200 U1 bekannt sind. Allerdings sind dort genannte Strömungskanäle speziell auf eine besondere Anwendungsart abgestimmt und dafür ausgelegt. So ist beispielsweise aus US 5,184,672 ein Strömungskanal für einen Wärmetauscher in Form eines Kondensators bekannt, der mit Flachrohren ausgerüstet ist, die von einem flüssigen Kühlmittel durchströmt werden. Aus US 3,486,489 ist ein Ölkühler bekannt, der mit Flachrohren ausgerüstet ist, die von zu kühlendem Öl durchströmt werden. Aus US 2005/0061488A1 ist ein zur Kühlung von Öl ausgelegter Wärmetauscher bekannt, dessen Strömungskanäle zur Führung des zu kühlenden Öls ausgelegt sind. Der durchströmbare Querschnitt der dort beschriebenen Strömungskanäle ist speziell zur Durchströmung von Öl ausgelegt. In US2005/0061488A1 ist der durchströmbare Querschnitt charakterisiert durch ein Leistungsverhältnis zwischen 3,9 und 8,5, das als Verhältnis eines benetzbaren Umfangs in mm zu einem durchströmbaren Querschnittsbereich des Metallrohres in mm² definiert ist.

Derartige auf die Führung von flüssigen Fluiden ausgelegte Strömungskanäle sind für den Einsatz bei einem Wärmetauscher der eingangs genannten Art nicht geeignet. Der Wärmetauscher der eingangs genannten Art ist insbesondere als ein Abgaswärmetauscher und/oder Ladeluftwärmetauscher ausgebildet. Das erste Fluid ist in dem Fall gasförmig oder dampfförmig, also beispielsweise ein Abgas oder ein Abgasluftgemisch oder eine Ladeluft. Das zweite Fluid ist in dem Fall ein Kühlmittel, insbesondere ein flüssiges oder gasförmiges oder ftüssig-gas-gemischtes Kühlmittel. Im Hinblick auf die oben erläuterten Probleme ist es wünschenswert ein verbessertes Auslegungskonzept für einen Strömurigskanal zu realisieren.

Zur Erlangung einer einfachen Bauweise sind die Strömungskanäle endseitig ah einem Bodenelement festgelegt, wobei jeweils beide Enden der durchgehenden Strömungskanäle in dem Bodenelement münden.

Die Strömungskanäle sind in einem von einem insbesondere flüssigen Kühlmittel durchströmbaren Gehäuse angeordnet Vorteilhaft weist dabei das Gehäuse einen Zufluss und einen Abfluss für das Kühlmittel auf, wobei eines der beiden, Zufluss oder Abfluss, in der Nähe des Umlenkbereichs der Strömungskanäle, insbesondere in der Nähe eines Scheitelpunkts des Umlenkbereichs, angeordnet ist. Hierdurch lässt sich eine möglichst umfassende und gleichmäßige Umströmung sämtlicher Strömungskanäle durch Kühlmittel auf einfache Weise erzielen, Zur weiteren Verbesserung der Umströmung kann bevorzugt in dem Gehäuse ein Leitelement zur Führung des Kühlmittels angeordnet sein. Solche Leit-. elemente können die Strömung auf bestimmte Bereiche richten und/oder Turbulenzen in dem Kühlmittel erzeugen.

In dem Gehäuse sind Stützmittel zur Halterung der Strömungskanäle angeordnet, um Schwingungsamplituden der Strömungskanäle zu begrenzen und somit Rissbildungen auch bei starken Vibrationen zu verhindern. Insoweit die Stützmittel sich in einem Gehäuse in flüssigem Kühlmittel befinden, können diese auch aus einem thermisch anspruchslosen Material wie Kunststoff bestehen um Kosten zu sparen.

Allgemein bevorzugt ist zur Einsparung von Herstellungskosten vorgesehen, dass das Gehäuse im Wesentlichen aus einem Kunststoff besteht.

Vorteilhaft ist zur Senkung der Herstellungskosten und zur einfachen Realisierung von aufwendigen Querschnittsformen ein Strömungskanal als ein Strangpressprofil ausgebildet. Besonders vorteilhaft sind dabei zumindest zwei Strömungskanäle innerhalb eines Strangpressprofils vorgesehen, wobei das Strangpressprofil eine von Kühlmittel umströmte Außenwand und eine die Strömungskanäle voneinander separierende Innenwand auf-. weist. Auf diese Weise lässt sich kostengünstig und betriebssicher eine große Berührfläche zwischen Fluid und wärmeübertragendem Material des Strömungskanals bereitstellen. Insbesondere bevorzugt weist die Außenwand dabei im Querschnitt einen zumindest teilweise verrundeten Verlauf zum Zweck der besseren Biegbarkeit auf. Durch diese Formgebung lässt sich ein zunächst linear ausgepresstes Strangpressprofil in einem weiteren Herstellungsschritt mit einem ausreichend eng gebogenen Umlenkbereich versehen, der zumeist als 180°-Bogenstück ausgeformt sein wird. Alternativ oder ergänzend kann die Innenwand zumindest in einem ungebogenen Zustand des Strangpressprofils eine über ihre Länge veränderliche Dicke aufweisen, wobei insbesondere ein dünner Bereich einem kleinen Biegeradius zugeordnet ist. Hierdurch lässt sich ebenfalls die Biegbarkeit des Bündels von Strömungskanälen verbessern. Derartige komplizierte Ausgestaltungen einer Querschnittsform stellen gerade bei der Verwendung von Strangpressprofilen keinen besonderen Aufwand dar. Dabei nimmt die Dicke idealerweise von 0.2...1,5 mm um das 1,2 bis 2 fache nach außen hin zu.

Allgemein bevorzugt sind mehrere Strangpresspröfile vorgesehen um einen effektiven Wärmeaustausch zwischen Kühlmittel und Strömungskanälen zu gewährleisten.

Vorteilhaft besteht das Strangpressprofil aus einer Legierung auf Basis von Aluminium. Aluminium hat eine durchaus gute Korrosionsresistenz und lässt sich auf kostengünstige Weise in weitgehend beliebige Querschnittsformen Strangpressen. Bei ausreichender Kühlung ist es durchaus auch im Bau von Abgas-Wärmetauschern verwendbar.

In bevorzugter Detailgestaltung ist einer der Strömungskanäle ein außenliegender Strömungskanal und ein anderer der Strömungskanäle ein innenliegender Strömungskanal, wobei der innenliegende Strömungskanal im Umlenkbereich einen kleineren Umlenkradius aufweist als der außenliegende Strömungskanal. Besonders bevorzugt hat dabei der innenliegende Strömungskanal eine größere Wandstärke als der außenliegende Strömungskanal, so dass insgesamt Gewicht und Materialmenge hinsichtlich der mechanischen Anforderungen bei der Herstellung des Wärmetauschers und insbesondere der Biegung der Strömungskanäle optimiert sind.

Vorteilhaft sind zur Verbesserung der Tauscherleistung bei gegebener Baugröße in zumindest einem der Strömungskanäle turbulenzerzeugende Mittel vorgesehen. Besonders bevorzugt variieren die turbulenzerzeugenden Mittel über einen Verlauf des Strömungskanals, wobei insbesondere ein Strömungswiederstand über den Verlauf des Strömungskanals größer wird. Dies ermöglicht eine Feinoptimierung der Tauscherleistung unter Berücksichtigung, dass die Temperaturdifferenz zwischen Fluid und umgebendem Kühlmittel über den Verlauf des Strömungspfades kleiner wird, so dass eine optimale Anpassung der Tauscherleistung pro Längeneinheit des Strömungskanals zwangsläufig mit einer Variation des Strömungswiederstandes bzw. des Anteils der erzeugten Turbulenzen im Fluidstrom einhergeht. Eine solche Anpassung kann bereits darin bestehen, dass im Bereich des ersten Strömungspfads andere turbulenzerzeugende Mittel vorliegen als im Bereich des zweiten Strömungspfads und/oder im Umlenkbereich.

In einer alternativen Ausführungsform weist ein Strömungskanal zwei gerade Abschnitte eines Rohrs auf, wobei in dem Umlenkbereich ein Bogenstück mit den beiden geraden Abschnitten verbunden ist. Je nach Art und Material der Strömungskanäle kann hierdurch die Herstellung vereinfacht werden.

Allgemein bevorzugt weisen die Strömungskanäle eine korrosionshemmende Beschichtung auf. Bei Abgaskühlern bieten sich solche Beschichtungen zur Verlängerung der Lebensdauer an.

Weiterhin liegt zumindest ein Strömungskanal des ersten Strömungspfads im Umlenkbereich an einem Strömungskanal des zweiten Strömungspfads benachbart an wobei der Umlenkbereich als separates, an Enden der beiden Strömungskanäle zu ihrer Verbindung angesetztes Element ausgebildet ist. Insbesondere für innenliegende Strömungskanäle mit entsprechend kleinem Umlenkbereich bietet sich hierdurch eine raumsparende Lösung bei zugleich relativ kleinen Wandstärken. Zudem kann der Abstand zwischen einander im Anschlussbereich benachbarten Strömungskanälen hierdurch besonders klein ausgestaltet werden, was insgesamt zu einer kleinen Bauweise des Wärmetauschers führt.

Bei zumindest einem der Strömungskanäle weist zumindest in einem ungebogenem Zustand eine bezüglich einer Biegung im Umlenkbereich innere Wandung eine kleinere Wandstärke auf als eine bezüglich der Biegung äußere Wandung. Hierdurch kann ein besonders enger Biegradius im Umlenkbereich erzielt werden. Vorzugsweise liegen die Wandstärken des außen liegenden Biegebereichs bei dem 1,2-2 fachen, am besten aber bei dem 1,5 fachen des bei der Biegung innen liegenden Wandbereichs. Die Wandstärke im inneren Biegeradius sollte dabei vorzugsweise im Bereich 0,42 mm liegen, idealerweise bei etwa 1 mm.

In einer weiteren bevorzugten Ausführung verläuft ein erster durchgehender Strömungskanal in einer ersten Ebene, wobei ein zweiter durchgehender Strömungskanal die Ebene insbesondere im Umlenkbereich schneidet. Insbesondere weisen der erste Strömungskanal und der zweite Strömungskanal hierbei eine unterschiedliche Länge auf. Auch durch diese Massnahme kann ein leerer und somit zu der Tauscherleistung nicht beitragender Zwischenraum zwischen benachbarten Strömungskanälen verringert werden, so dass insgesamt die Baugröße bei gegebener Tauscherleistung reduziert wird. Weitere Vorteile und Merkmale ergeben sich aus den nachfolgend beschriebenen Ausführungsbeispielen sowie aus den abhängigen Ansprüchen.
Fig. 1.1 zeigt eine allgemeine schematische räumliche Darstellung eines U-Flow-Abgaswärmetauschers,
Fig. 2.1 zeigt eine schematische Draufsicht auf ein erstes Beispiel eines Wärmetauschers,
Fig. 3.1 zeigt eine schematische Draufsicht auf eine Abwandlung des Wärmetauschers aus Fig. 2.1,
Fig. 4.1 zeigt eine anschlussseitige Draufsicht auf ein zweites Beispiel eines Wärmetauschers,
Fig. 5.1 zeigt eine anschlussseitige Draufsicht auf ein drittes Beispiel eines Wärmetauschers,
Fig. 6.1 zeigt eine anschlussseitige Draufsicht auf ein viertes Beispiel eines Wärmetauschers,
Fig. 7.1 zeigt eine anschlussseitige Draufsicht auf ein fünftes Beispiel eines Wärmetauschers,
Fig. 8.1 zeigt eine schematische Draufsicht auf eine vorteilhafte Abwandlung des Wärmetauschers aus Fig. 2.1,
Fig. 9.1 zeigt eine schematische Schnittansicht durch einen vollständig montierten Wärmetauscher nach Fig. 1.1,
Fig. 10.1 zeigt eine räumliche Darstellung eines sechsten Beispiels eines Wärmetauschers.
Fig. 11.1 zeigt eine Draufsicht auf den Wärmetauscher aus Fig. 10.1 unter Weglassung eines äußeren Gehäuses,
Fig. 12.1 zeigt eine Detailansicht einer Abwandlung des Wärmetauschers aus Fig. 10.1,
Fig. 13.1 zeigt eine anschlussseitige Draufsicht auf ein siebentes Beispiel eines Wärmetauschers,
Fig. 14.1 zeigt eine Draufsicht auf ein einen erfindungsgemäßen Abgaskühler.

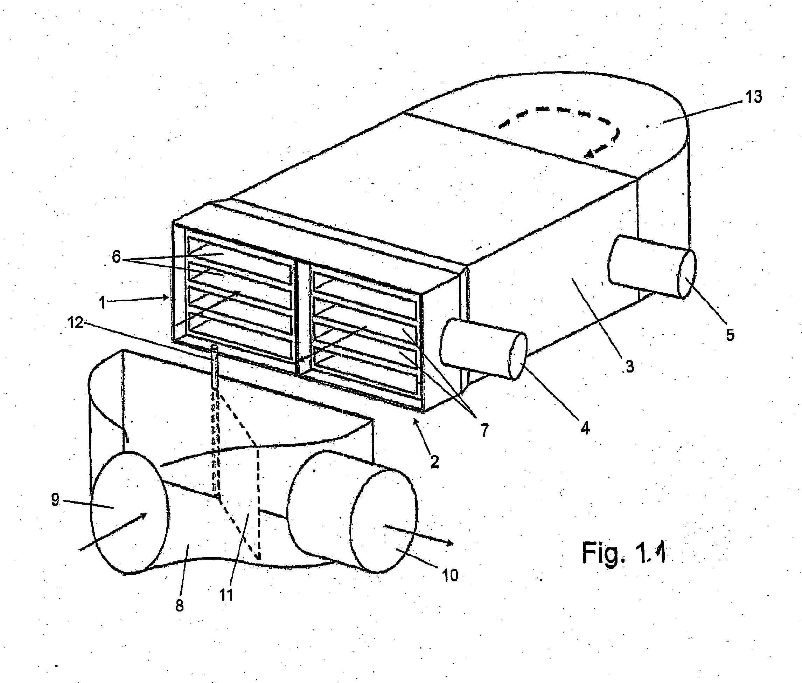

Fig. 1.1 zeigt allgemein schematisch einen Warmetauscher der U-Flow-Bauweise zur Kühlung von rückgeführtem Abgas eines Kraftfahrzeug-Dieselmotors. Der schematisierte Wärmetauscher nach Fig. 1 kann sowohl dem Stand der Technik entsprechen als auch erfindungsgemäß sein. Ein erster Strömungspfad 1 und ein zweiter Strömungspfad 2 verlaufen parallel und nebeneinander innerhalb eines Gehäuses 3. Das Gehäuse 3 wird mittels zweier Anschlüsse 4, 5 von einem flüssigen Kühlmittel durchströmt, das aus einem Hauptkühlkreislauf des Dieselmotors abgezweigt ist. Die Strömungspfade 1, 2 umfassen jeweils eine Mehrzahl von Strömungskanälen 6, 7, die vorliegend als Flachrohre mit rechteckigem Querschnitt ausgebildet sind. Der Querschnitt kann grundsätzlich auch eine andere, z. B. runde, Form aufweisen.

Jedes der Rohre 6, 7 wird innerhalb des Gehäuses 3 von dem flüssigen Kühlmittel umströmt. An einer vorderen Anschlussseite des Gehäuses 3 ist ein Anschlussbereich 8 angeordnet und durch Verschweißung verbunden, der in Fig. 1.1 aus Gründen der Übersichtlichkeit separiert von dem Gehäuse 3 dargestellt ist. Der Anschlussbereich 8 weist einen ersten Anschluss zur Zuführung von Abgas eines Dieselmotors des Kraftfahrzeugs sowie einen zweiten Anschluss 10 zur Abführung des gekühlten Abgases auf. Innerhalb des Anschlussbereichs 8 ist ein als schwenkbare Klappe ausgebildetes Stellelement 11 vorgesehen, welches über eine Drehwelle 12 verstellbar ist. In einer ersten Stellung des Stellelements 11 gemäß Fig. 1.1 wird das Abgas von dem ersten Anschluss 9 in den ersten Strömungspfad 1 geleitet, wo es zunächst eine erste Kühlung erfährt. Nach Durchströmen des ersten Strömungspfads 1 tritt das Abgas in einen endseitig des Gehäuses 3 angeordneten Umlenkbereich 13 ein.

Im Stand der Technik ist der Umlenkbereich als hohles Gehäuseteil ausgebildet, in dem der Abgasstrom um 180° umgelenkt wird, wonach er in den zweiten Strömungspfad 2 eintritt; die Strömungskanäle 6, 7 sind im Stand der Technik separate gerade Rohre, die gemeinsam an ihren beiden Endseiten in jeweils einem Bodenstück aufgenommen sind. Im Umlenkbereich 13 findet somit eine Zusammenführung des Fluids aus den einzelnen Strömungskanälen statt und ein Wärmeaustausch zwischen Abgas und Kühlmittel findet im Umlenkbereich kaum statt.

Den zweiten Strömungspfad 2 durchströmt das Abgas in zu dem ersten Strömungspfad 1 entgegengesetzter Richtung, wobei es eine weitere Abkühlung erfährt. Bei Verlassen des zweiten Strömungspfads 2 tritt das Abgas wieder in den Anschlussbereich 8 ein, wo es im Fall der ersten Stellung des Stellelements 11 gemäß Fig. 1 in den zweiten Anschluss 10 geführt wird. Bei einer anderen, nicht dargestellten Stellung des Stellelements 11 wird das Abgas an einer Durchströmung der Strömungspfade 1, 2 gehindert, wobei es unmittelbar von dem ersten Anschluss 9 in den zweiten Anschluss 10 geleitet wird. Hierbei erfährt es keine wesentliche Abkühlung, so dass diese Betriebsart vornehmlich bestimmten Betriebsbedingungen wie etwa einer Warmlaufphase des Verbrennungsmotors zugeordnet ist ("Bypass-Betrieb").

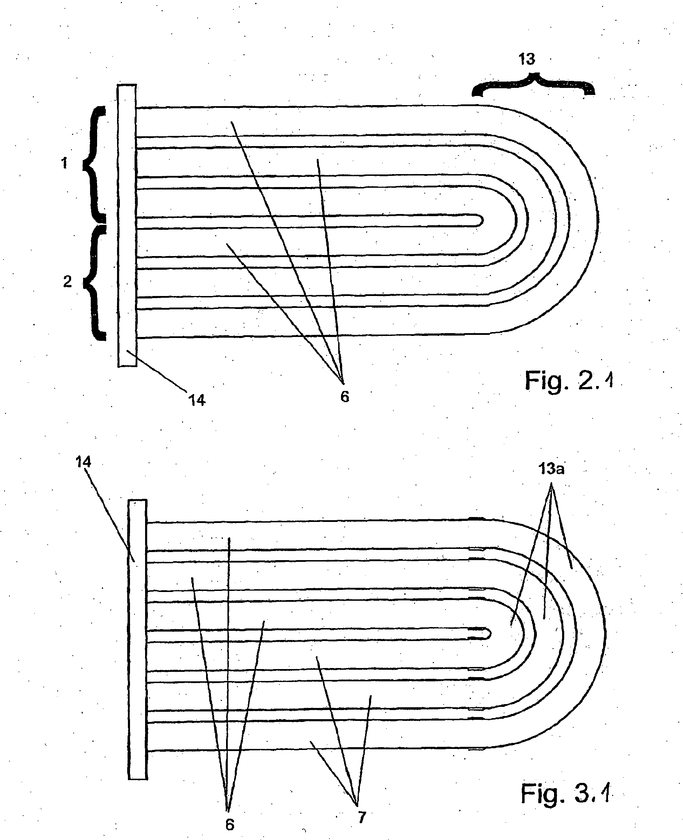

Bei dem ersten Beispiel nach Fig. 2.1 sind die Strömungskanäle 6 als durchgehende Rohre ausgebildet, die im Einlassbereich des ersten Strömungspfads 1 beginnen, im Umlenkbereich 13 mit jeweils unterschiedlichen Krümmungsradien um 180° umgebogen sind und nach Durchlaufen des zweiten Strömungspfades im Auslassbereich enden. Jeder der Strömungskanäle 6 hat somit nur zwei Enden, ein einlassseitiges Ende und ein auslassseitiges Ende. Jeweils beide Enden sind in einem einzigen Bodenelement 14 aufgenommen und dort gasdicht verschweißt.

Auf diese Weise werden aufgrund der einfacheren Herstellung nicht nur Herstellungskosten gespart, sondern es wird aufgrund der kleineren Anzahl von Verschweißungsstellen auch eine erhöhte Betriebssicherheit und eine kleinere Menge von Ausschuss erzielt. Zudem trägt der Umlenkbereich 13 aktiv zur Kühlung des Abgases bei, da auch im Umlenkbereich das Abgas in Wechselwirkung mit dem die Strömungskanäle 6 umströmenden Kühlmittel steht.

In der Abwandlung nach Fig. 3.1 sind die Strömungskanäle nicht ursprünglich einstückig, sondern umfassen jeweils einen ersten geraden Strömungskanalabschnitt 6 des ersten Strömungspfads 1, ein um 180° gebogenes Bogenstück 13a, das dem Umlenkbereich 13 zugeordnet ist sowie einen zweiten geraden Abschnitt 7, der dem zweiten Strömungspfad 2 zugeordnet ist. Diese einzelnen Elemente eines jeweiligen Strömungskanals werden im Zuge der Herstellung gasdicht miteinander verschweißt. Hierdurch lassen sich Betriebssicherheit und Herstellungskosten verbessern, da die Anforderungen an die Strömungskanäle und ihre Wandmaterialien und Stärken im Bereich der geraden Abschnitte anders. sind als im Bereich der Bogenstücke 13a.

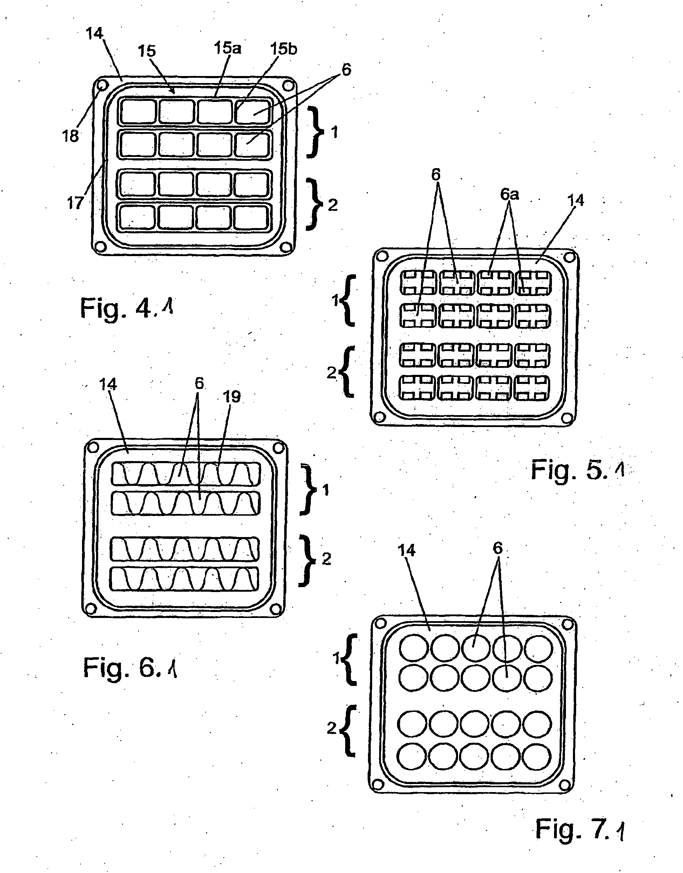

In dem zweiten Beispiel gemäß Fig. 4.1 umfasst der Wärmetauscher jeweils zwei U-förmig gebogene Strangpressprofile 15 aus Aluminium, wobei ein inneres Strangpressprofil einen kleineren Biegeradius aufweist als ein äußeres Strangpressprofil. Jedes der Strangpressprofile 15 umfasst vier Strömungskanäle 6, die durch innere Wände 15a voneinander und durch eine Außenwand 15b von dem Kühlmittel getrennt sind. Das Bodenelement 14, in dem die Strangpressprofile 15 mit ihren Enden gasdicht verschweißt aufgenommen sind, ist insgesamt als Flansch ausgebildet, der eine Nut 17 zur Aufnahme einer Dichtung sowie Bohrungen 18 zur Verschraubung mit einem weiteren Anschlussbereich 8 aufweist.

In einem dritten Beispiel nach Fig. 5.1 sind im Unterschied zu dem zweiten Ausführungsbeispiel die Strömungskanäle 6 nicht als Strangpressprofile ausgebildet, sondern als Rohre aus Edelstahl. Diese Rohre weisen in ihren Außenwandungen nach innen ragende Einprägungen 6a auf, die als an sich bekannte Dimpel oder Winglets ausgebildet sein können. Diese Ausformungen stellen turbulenzerzeugende Mittel dar, durch die der Wärmeaustausch mit dem Abgas verbessert ist. Im vorliegenden Beispiel sind die turbulenzerzeugenden Mittel 6a im ersten Strömungspfad 1 und im zweiten Strömungspfad 2 jeweils gleich ausgebildet. Bevorzugt können diese Ausformungen auch unterschiedlich sein, um der zunehmenden Abkühlung des Fluids im Verlauf des Strömungskanal Rechnung zu tragen.

In dem vierten Beispiel gemäß Fig. 6.1 bestehen die Strömungskanäle 6 ebenfalls aus Edelstahl-Flachrohren, wie sie an sich aus dem Stand der Technik bekannt sind. Zur Verbesserung der Wärmetauscherleistung sind wellrippenförmige Einlagen 19 in die Strömungskanäle 6 eingeschoben und angeschweißt. Auch hier können die Einlapen eingangsseitig und ausgangsseitig unterschiedliche Ausformungen, insbesondere Füppendichten, aufweisen um der sinkenden Temperatur des Abgases entlang der Strömungskanäle Rechnung zu tragen.

Bei dem fünften Beispiel gemäß Fig. 7.1 sind die Strömungskanäle 6 als Rohre mit kreisrundem Querschnitt ausgebildet. In diesen Rohren können nicht dargestellte Turbulenzeinlagen oder Einlagen zur Drallerzeugung zwecks Verbesserung der Tauscherleistung vorgesehen sein.

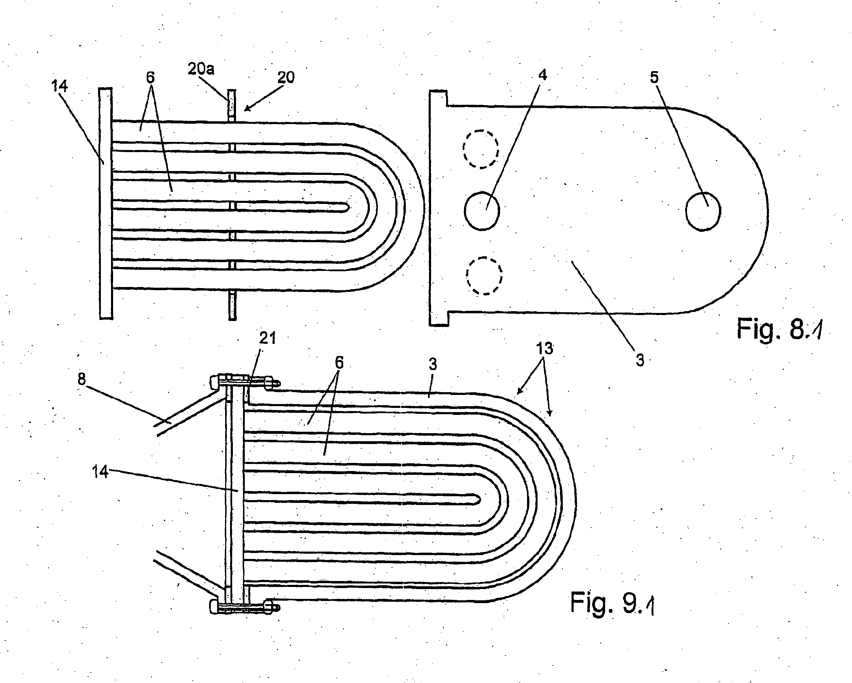

Fig. 8 zeigt eine Abwandlung der Ausführung aus Fig. 1.1 mit weiteren Detailverbesserungen. Dabei ist das Gehäuse 3 von dem Bodenelement 14 mit seinen Strömungskanälen 6 getrennt dargestellt. Außen an den Strömungskanälen 6 und innerhalb des Gehäuses 3 ist ein Leitelement 20 zur Führung des Kühlmittels vorgesehen. Dieses verläuft quer zu den Strömungskanälen 6 und weist in seinem äußeren, gehäusewandungsnahen Bereich 20a eine Sperre für das Kühlmittel auf. Hierdurch wird eine gleichmäßigere und besser verteilte Umströmung der Strömungskanäle 6 mit dem Kühlmittel erzielt. Die beiden Anschlüsse 4, 5 für das Kühlmittel sind als durchgezogene Kreise auf dem Gehäuseteil 3 dargestellt. In alternativer Ausführung mit entsprechender Anpassung von Form und Anordnung des Leitmittels 20 können die Anschlüsse auch anders positioniert sein, z. B. gemäß der gestrichelten Kreise. Das Leitmittel 20 kann auch gleichzeitig als Stützmittel für eine Abstützung der Strömungskanäle 6 dienen, um diese vor allzu großen Schwingungsamplituden zu schützen.

Fig. 9.1 zeigt eine fertig montierte Schnittdarstellung des Wärmetauschers nach Fig. 1. Hieraus wird deutlich, dass lediglich im Bereich einer Verschraubung des Gehäuses 3 mit dem Bodenelement 14 und einem Anschlussbereich 8 eine hohe Temperatur auf das Gehäuse 3 einwirken könnte, welches im übrigen lediglich mit dem flüssigen Kühlmittel in Kontakt steht. Bei entsprechender Auslegung insbesondere mittels angepasster Dichtungen und Abstandshalter 21 kann somit erreicht werden, dass das Gehäuse 3 trotz der hohen Temperaturen des Abgases auch aus einem Kunststoff gefertigt werden kann.

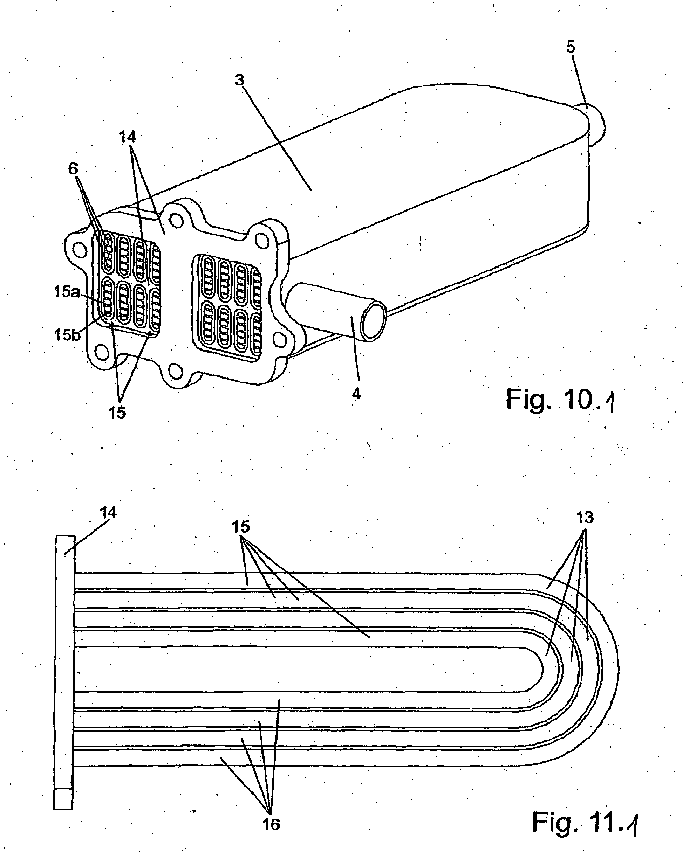

Bei dem sechsten Beispiel gemäß Fig. 10.1 und Fig. 11.1 umfasst der Wärmetauscher insgesamt achtundvierzig separate Strömungskanäle 6. Diese verteilen sich auf acht u-förmig gebogene Strangpressprofile 15 mit je sechs voneinander separierten Strömungskanälen 6. Jeweils zwei Strangpressprofile 15 verlaufen benachbart zueinander mit gleichem Krümmungsradius des Umlenkbereichs, so dass insgesamt vier bezüglich der unterschiedlichen Biegeradien verschiedene Strangpressprofile vorliegen, die ineinander verschachtelt sind (siehe auch die Draufsicht Fig. 11.1). Jedes der Strangpressprofile 15 hat eine Außenwandung 15a, die im Querschnitt zwei parallele lange Seiten und zwei halbkreisförmig gebogene kurze Seiten aufweist. Die langen Seiten stehen dabei senkrecht auf die Ebene, in der das Strangpressprofil 15 verläuft. Durch diese Formgebung wird eine Biegung der Strangpressprofile auch bei kleinen Biegeradien in den Umlenkbereichen 13 ermöglicht. Wie die maßstabsgerechte Zeichnung Fig. 10 zeigt, sind die Außenwände der Strangpressprofile 15 deutlich dicker als die die sechs Strömungskanäle voneinander trennenden Innenwände 15b. Die Strangpressprofile bestehen aus einer Aluminiumlegierung. Die Stärke der Außenwand beträgt etwa 1,5mm. Die Innenwände oder Trennstege 15b innerhalb eines Strangpressprofils weisen eine Dicke von etwa 0,5mm auf. Der Querschnitt eines Strangpressprofils ist jeweils etwa 20mm lang und etwa 7mm breit, wenn die Rohre in Querrichtung in zwei Reihen angeordnet sind. Die Rohre können aber auch etwas breiter oder schmäler in beide Richtungen ausgeführt werden, z.B. 22 x 6,5 mm oder 22 x 7,5 mm.

Bei einreihigen Rohrsystemen sind die Rohre vorzugsweise in der Breite 30-60 mm zu wählen, idealerweise im Bereich 40-50 mm.

Bevorzugt ist einer der Anschlüsse 4, 5 des Gehäuses 3 an einem Gehäuseende in der Nähe des Bodenelements 14 vorgesehen. Der andere Anschluss 4, 5 für das Kühlmittel ist in der Nähe des Umlenkbereichs 13 in einer Symmetrieebene zwischen den beiden Strömungspfaden 1, 2 im Bereich eines Scheitelpunkts des Umlenkbereichs 13 angeordnet. Hierdurch wird mit einfachen Mitteln gewährleistet, dass auch in dem Umlenkbereich 13 eine ausreichende Umströmung der Strömungskanäle 6 mit dem flüssigen Kühlmittel stattfindet. Der Kühlkreislauf des Wärmetauschers steht vorliegend mit einem Hauptkühlkreislauf des Verbrennungmotors in Verbindung.

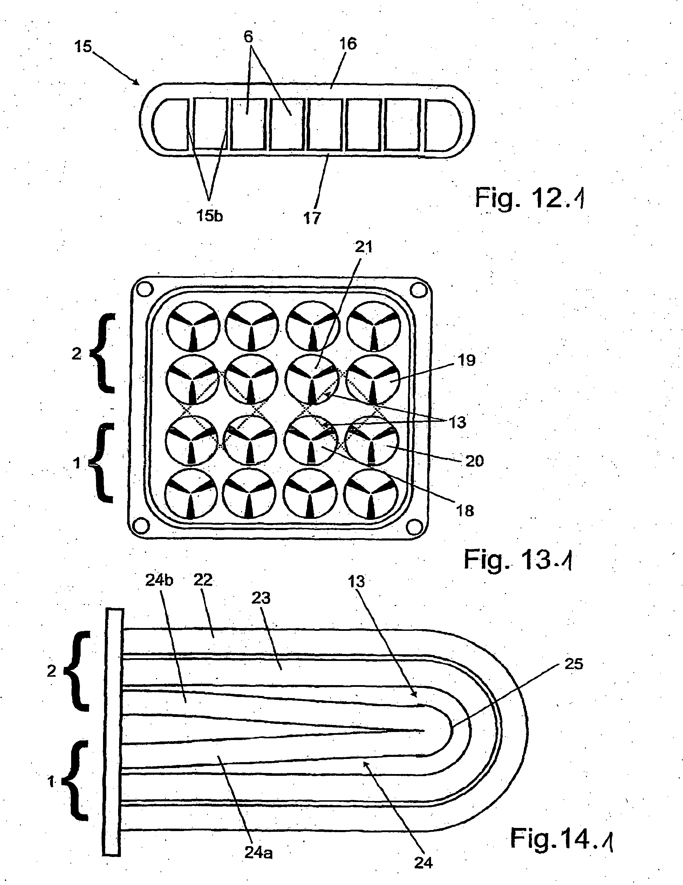

Die Abwandlung gemäß Fig. 12.1 zeigt den Querschnitt durch ein noch ungebogenes Strangpressprofil. Erkennbar hat dabei eine der langen Außenwände 16 eine kleinere Dicke als die andere der langen Außenwände 17. Die dickere Außenwand 17 ist hinsichtlich der Biegung im Umlenkbereich Außenliegend und die dünnere Wandung 17 ist innenliegend angeordnet. Im Zuge der Biegung werden die Wanddicken aufgrund der längeren äußeren Umlauflänge einander angeglichen.

Das Beispiel nach Fig. 13.1 ist ähnlich dem nach Fig. 7.1 ausgebildet. Im Unterschied zu der Ausführung nach Fig. 7.1 laufen nicht sämtliche der Strömungskanäle parallel nebeneinander, sondern einige der Kanäle schneiden in ihrem Verlauf Ebenen, in denen andere Kanäle verlaufen. Dies ist durch die gestrichelten Linien angedeutet. Ein erster Strömungskanal 18 des ersten Strömungspfads 1 ist im Umlenkbereich 13 mit einem ersten Strömungskanal 19 des zweiten Strömungspfads 2 verbunden. Dieser Kanal verläuft in einer bezüglich der Zeichnung diagonalen Ebene. Ein zweiter Strömungskanal 20 des ersten Strömungspfads 1 ist mit einem zweiten Strömungskanal 21 des zweiten Strömungspfads 2 verbunden. Dieser Kanal 20,21 schneidet bzw. kreuzt mit seinem Umlenkbereich die genannte Ebene des ersten Kanals. Damit der durchgehende Kanal 18, 19 an dem anderen durchgehenden Kanal 20, 21 vorbeiführen kann, sind die Kanäle unterschiedlich lang ausgebildet. Senkrecht zur Zeichnungsebene der Fig. 13.1 liegt somit der eine Umlenkbereich vor dem anderen Umlenkbereich.

Hierdurch können bei gegebenen minimalen Biegeradien in den Umlenkbereichen die Abstände der betreffenden Strömungskanäle im Anschlussbereich verringert werden. Insbesondere kann ein den ersten Strömungspfad 1 vom zweiten Strömungspfad 2 trennender Abstand klein gehalten werden. Im Falle des Beispiels nach Fig. 13.1 sind zudem im Unterschied zu Fig. 7.1 Mittel zur Drallerzeugung innerhalb der einzelnen Strömungskanäle 18, 19, 20, 21 angedeutet.

Eine Möglichkeit zur Verkleinerung der Baugröße und insbesondere des notwendigen kleinsten Abstands der Strömungskanäle der beiden Strömungspfade 1, 2 zeigt das erfindungsgemäße Ausführungsbeispiel nach Fig. 14.1. Hier sind außenliegende Strömungskanäle 22, 23 als durchgehende, im Umlenkbereich gebogene Rohre, zum Beispiel Strangpressprofile, ausgebildet. Für den innenliegenden Strömungskanal 24 wäre der erforderliche Biegeradius zu klein. Daher umfasst er zwei separate Rohre 24a, 24b, die jeweils einem der Strömungspfade 1, 2 zugeordnet sind und im Anschlussbereich entsprechend benachbart mit geringem Abstand münden. Die Kanäle 24a, 24b sind in ihrem Verlauf leicht S-förmig gebogen, so dass sich ihre Außenwände im Umlenkbereich 13 berühren, wobei die Kanalwände im Bereich der Berührung dicht aneinander verschweißt sind. Zur Vervollständigung des Umlenkbereichs ist eine gebogene Kappe 25 als Element zur Verbindung der Kanäle 24a, 24b auf die Kanalenden aufgesetzt und dicht verschweißt.

## Patentansprüche

1. Abgaskühler für ein Kraftfahrzeug, umfassend
ein Gehäuse (3),
einen ersten Strömungspfad (1) mit einer Mehrzahl von Strömungskanälen (6) zur Führung eines zu kühlenden Fluids,
einen dem ersten Strömungspfad (1) nachgeordneten Umlenkbereich (13), und einen dem Umlenkbereich (13) nachgeordneten zweiten Strömungspfad (2),
wobei
die Strömungskanäle (6) des ersten Strömungspfads (1) in dem Umlenkbereich (13) und in dem zweiten Strömungspfad (2) als durchgehende, voneinander separierte Strömungskanäle (6) fortgesetzt sind, und
die Strömungskanäle (6) endseitig an einem Bodenelement (14) festgelegt sind, wobei jeweils beide Enden der durchgehenden Strömungskanäle (6) in dem Bodenelement (14) münden und in dem Gehäuse (3) ein Leitelement (20) zur Führung des Kühlmittels angeordnet ist,
**dadurch gekennzeichnet, dass**
bei zumindest einem der Strömungskanäle zumindest in einem ungebogenen Zustand eine bezüglich einer Biegung im Umlenkbereich (13) innere Wandung (17) eine kleinere Wandstärke aufweist als eine bezüglich der Biegung äußere Wandung (18),
wobei in dem Gehäuse Stützmittel (20) zur Halterung der Strömungskanäle (6) angeordnet sind, wobei das Leitelement auch als Stützmittel für eine Abstützung der Strömungskanäle dient, wobei zumindest ein Strömungskanal (24a) des ersten Strömungspfads (1) im Umlenkbereich an einem Strömungskanal (24b) des zweiten Strömungspfads (2) benachbart anliegt, wobei der Umlenkbereich (13) ein separates, an Enden der beiden Strömungskanäle (24a, 24b) zu ihrer Verbindung angesetztes Element (25) umfasst.

2. Abgaskühler nach Anspruch 1, **dadurch gekennzeichnet, dass** das Gehäuse (3) im Wesentlichen aus einem Kunststoff besteht.

3. Abgaskühler nach einem der vorhergehenden Ansprüche, **dadurch gekennzeichnet, dass** ein Strömungskanal (6) als ein Strangpressprofil (15) ausgebildet ist.

4. Abgaskühler nach Anspruch 1, **dadurch gekennzeichnet, dass** die Innenwand (15b) zumindest in einem ungebogenen Zustand des Strangpressprofils eine über ihre Länge veränderliche Dicke aufweist, wobei insbesondere ein dünner Bereich einem kleinen Biegeradius zugeordnet ist.

5. Abgaskühler nach einem der Ansprüche 3 oder 4, **dadurch gekennzeichnet, dass** das Strangpressprofil (15) aus einer Legierung auf Basis von Aluminium besteht.

6. Abgaskühler nach Anspruch 1, **dadurch gekennzeichnet, dass** der innenliegende Strömungskanal eine größere Wandstärke aufweist als der außenliegende Strömungskanal.

7. Abgaskühler nach einem der vorhergehenden Ansprüche, **dadurch gekennzeichnet, dass** in zumindest einem der Strömungskanäle (6) turbulenzerzeugende Mittel (6a) vorgesehen sind.

8. Abgaskühler nach einem der vorhergehenden Ansprüche, **dadurch gekennzeichnet, dass** die Strömungskanäle (6) eine korrosionshemmende Beschichtung aufweisen.

## Claims

1. Exhaust gas cooler for a motor vehicle, comprising a housing (3), a first flow path (1) having a multitude of flow ducts (6) for conducting a fluid which is to be cooled, a deflecting region (13) connected downstream of the first flow path (1), and a second flow path (2) connected downstream of the deflecting region (13), wherein the flow ducts (6) of the first flow path (1) are continued in the deflecting region (13) and in the second flow path (2) as continuous flow ducts (6) which are separate from one another, and the flow ducts (6) are fixed at the end side to a base element (14), wherein in each case both ends of the continuous flow ducts (6) open out in the base element (14) and a guide element (20) for guiding the coolant is arranged in the housing (3), **characterized in that**, in at least one of the flow ducts, at least in a non-bent state, an inner wall (17) in relation to a bend in the deflecting region (13) has a smaller wall thickness than an outer wall (18) in relation to the bend, wherein support means (20) for holding the flow ducts (6) are arranged in the housing, wherein the guide element also serves as support means for supporting the flow ducts, wherein at least one flow duct (24a) of the first flow path (1) bears adjacently against a flow duct (24b) of the second flow path (2) in the deflecting region, wherein the deflecting region (13) comprises a separate element (25) which is placed on ends of the two flow ducts (24a, 24b) in order to connect them.

2. Exhaust gas cooler according to claim 1, **characterized in that** the housing (3) is composed substantially of a plastic.

3. Exhaust gas cooler according to one of the preceding claims, **characterized in that** a flow duct (6) is formed as an extruded profile (15).

4. Exhaust gas cooler according to claim 1, **characterized in that** the inner wall (15b), at least in a non-bent state of the extruded profile, has a thickness which varies over its length, wherein in particular a thin region is assigned to a small bend radius.

5. Exhaust gas cooler according to one of claims 3 or 4, **characterized in that** the extruded profile (15) is composed of an aluminum-based alloy.

6. Exhaust gas cooler according to claim 1, **characterized in that** the inner flow duct has a greater wall thickness than the outer flow duct.

7. Exhaust gas cooler according to one of the preceding claims, **characterized in that** turbulence-generating means (6a) are provided in at least one of the flow ducts (6).

8. Exhaust gas cooler according to one of the preceding claims, **characterized in that** the flow ducts (6) have a corrosion-inhibiting coating.

## Revendications

1. Refroidisseur de gaz d'échappement pour un véhicule automobile, comprenant un carter (3), un premier trajet d'écoulement (1) comportant une pluralité de conduits d'écoulement (6) servant à l'acheminement d'un fluide à refroidir, une zone de retour de flux (13) disposée en aval du premier trajet d'écoulement (1), et un deuxième trajet d'écoulement (2) disposé en aval de la zone de retour de flux (13), où les conduits d'écoulement (6) du premier trajet d'écoulement (1) continuent, dans la zone de retour de flux (13) et dans le deuxième trajet d'écoulement (2), comme des conduits d'écoulement (6) formés de façon ininterrompue et séparés les uns des autres, et les conduits d'écoulement (6) sont fixés, côté extrémité, sur un élément de fond (14), où les deux extrémités des conduits d'écoulement (6) formés de façon ininterrompue débouchent à chaque fois dans l'élément de fond (14), et un élément conducteur (20) servant au guidage du moyen de refroidissement est disposé dans le carter (3), **caractérisé en ce que**, dans le cas d'au moins l'un des conduits d'écoulement, au moins dans un état non recourbé, une paroi intérieure (17) présente, par rapport à une courbure dans la zone de retour de flux (13), une épaisseur de paroi inférieure à celle d'une paroi extérieure (18) par rapport à la courbure, où des moyens supports (20) servant au maintien des conduits d'écoulement (6) sont disposés dans le carter, où l'élément conducteur sert également de moyen support pour un appui des conduits d'écoulement, où au moins un conduit d'écoulement (24a) du premier trajet d'écoulement (1) se juxtapose de façon contiguë, dans la zone de retour de flux, à un conduit d'écoulement (24b) du deuxième trajet d'écoulement (2), où la zone de retour de flux (13) comprend un élément séparé (25) placé au niveau des extrémités des deux conduits d'écoulement (24a, 24b) pour assurer leur communication.

2. Refroidisseur de gaz d'échappement selon la revendication 1, **caractérisé en ce que** le carter (3) se compose essentiellement d'une matière plastique.

3. Refroidisseur de gaz d'échappement selon l'une ou l'autre des revendications précédentes, **caractérisé en ce qu'**un conduit d'écoulement (6) est conçu comme un profilé extrudé (15).

4. Refroidisseur de gaz d'échappement selon la revendication 1, **caractérisé en ce que** la paroi intérieure (15b) présente une épaisseur variable sur sa longueur, dans au moins un état non recourbé du profilé extrudé, où en particulier une zone plus mince est associée à un faible rayon de courbure.

5. Refroidisseur de gaz d'échappement selon l'une des revendications 3 ou 4, **caractérisé en ce que** le profilé extrudé (15) se compose d'un alliage à base d'aluminium.

6. Refroidisseur de gaz d'échappement selon la revendication 1, **caractérisé en ce que** le conduit d'écoulement se trouvant à l'intérieur présente une épaisseur de paroi supérieure à celle du conduit d'écoulement se trouvant à l'extérieur.

7. Refroidisseur de gaz d'échappement selon l'une quelconque des revendications précédentes, **caractérisé en ce qu'**il est prévu des moyens (6a) produisant des turbulences dans au moins l'un des conduits d'écoulement (6).

8. Refroidisseur de gaz d'échappement selon l'une quelconque des revendications précédentes, **caractérisé en ce que** les conduits d'écoulement (6) présentent un revêtement inhibiteur de corrosion.
